# EUROPÄISCHE PATENTANMELDUNG

(11) **EP 3 240 150 A1**
(43) Veröffentlichungstag der Anmeldung: **01.11.2017**
(21) Anmeldenummer: 16166838.9
(22) Anmeldetag: 25.04.2016
(51) Int. Cl.: H02K 3/40, H02K 3/34, H02K 15/00, H02K 1/16

(54) **ELEKTRISCHE MASCHINE SOWIE VERFAHREN ZUM AUSEINANDERBAUEN UND HERSTELLEN DER ELEKTRISCHEN MASCHINE**

(71) Anmelder: Siemens Aktiengesellschaft, 80333 München (DE)
(72) Erfinder: Mashkin, Andrey, 50672 Köln (DE); Brockschmidt, Mario, 45131 Essen (DE); Staubach, Christian, 45768 Marl (DE); Pohlmann, Friedhelm, 45355 Essen (DE); Schmidt, Guido, 42799 Leichlingen (DE)

(57) **Zusammenfassung**

Die Erfindung betrifft eine elektrische Maschine, mit einem elektrischen Leiter (1), einer den Leiter (1) umhüllenden Hauptisolation (2), einem die Hauptisolation (2) umhüllenden Außenglimmschutz (3), einem Blechpaket (4) mit Nuten, in die der Leiter (1) eingebracht ist, und einer elektrisch leitfähigen Schicht (16), die radial außerhalb des Außenglimmschutzes (3) angeordnet ist und eingerichtet ist den Außenglimmschutz (3) mit dem Blechpaket (4) elektrisch leitfähig zu verbinden, wobei die Haftungen von Hauptisolation (2), Außenglimmschutz (3), elektrisch leitfähiger Schicht (16) und Blechpaket (4) derart aufeinander abgestimmt sind, dass an einer Oberfläche der elektrisch leitfähigen Schicht (16) die geringste Haftung vorliegt.

## Beschreibung

Eine Hochspannungsmaschine, wie beispielsweise ein Turbogenerator in einem Kraftwerk zur Erzeugung von elektrischer Energie, ist einer hohen mechanischen, thermischen und elektrischen Beanspruchung ausgesetzt. Der Turbogenerator weist insbesondere ein Blechpaket und eine Wicklung elektrischer Leiter auf. Die Leiter sind von einer Hauptisolation umhüllt, die die Leiter gegeneinander, gegen das Blechpaket und gegen die Umgebung elektrisch isolieren. Zur Vermeidung von Teilentladungen an der Grenzfläche zwischen der Hauptisolation und dem Blechpaket im Betrieb der Hochspannungsmaschine ist zwischen der Hauptisolation und dem Blechpaket ein schwach leitender und geerdeter Außenglimmschutz vorgesehen.

Zur Herstellung der Hochspannungsmaschine kann das Blechpaket zusammen mit der Wicklung in einem Ganztränkprozess unter Beaufschlagung von Vakuum in ein Bad mit einem Imprägnierharz getaucht werden. Dabei werden die Hauptisolation und der Außenglimmschutz von dem Imprägnierharz durchtränkt. Nach dem Durchtränken wird das Imprägnierharz, insbesondere unter einer Druckbeaufschlagung, ausgehärtet.

Wird zum Zweck einer Reparatur die Wicklung von dem Blechpaket entfernt, so können Reste des Außenglimmschutzes an dem Blechpaket kleben bleiben. Bevor eine neue Wicklung an dem Blechpaket angebracht wird, ist es erforderlich, dass die Reste von dem Blechpaket entfernt werden. Herkömmlich wird dazu ein mechanisches oder ein lasertechnisches Verfahren angewendet. Diese Verfahren benötigen jedoch einen großen Zeitaufwand und sind somit kostenintensiv. Zudem besteht bei diesen Verfahren die Gefahr einer Beschädigung des Blechpakets.

Aufgabe der Erfindung ist es daher eine elektrische Maschine, ein Verfahren zum Auseinanderbauen der elektrischen Maschine und ein Verfahren zum Herstellen der elektrischen Maschine zu schaffen, wobei elektrische Leiter der elektrischen Maschine leicht von dieser entfernbar sind.

Die Aufgabe wird gelöst mit den Merkmalen der Ansprüche 1, 14 und 15. Bevorzugte Ausgestaltungen dazu sind in den weiteren Patentansprüchen angegeben.

Die erfindungsgemäße elektrische Maschine weist einen elektrischen Leiter, eine den Leiter umhüllende Hauptisolation, einen die Hauptisolation umhüllenden Außenglimmschutz, ein Blechpaket mit Nuten, in die der Leiter eingebracht ist, und eine elektrisch leitfähige Schicht auf, die radial außerhalb des Außenglimmschutzes angeordnet ist und eingerichtet ist den Außenglimmschutz mit dem Blechpaket elektrisch leitfähig zu verbinden, wobei die Haftungen von Hauptisolation, Außenglimmschutz, elektrisch leitfähiger Schicht und Blechpaket derart aufeinander abgestimmt sind, dass an einer Oberfläche der elektrisch leitfähigen Schicht die geringste Haftung vorliegt.

Durch das Vorsehen der elektrisch leitfähigen Schicht wird beim Entfernen des elektrischen Leiters mit der Hauptisolation und den Außenglimmschutz aus den Nuten eine Trennung an der Oberfläche der elektrisch leitfähigen Schicht erfolgen. Dadurch wird unterbunden, dass Reste des Außenglimmschutzes an dem Blechpaket kleben bleiben. Zudem kann der elektrische Leiter zusammen mit der Hauptisolation und dem Außenglimmschutz leichter aus den Nuten entfernt werden, als es bei herkömmlichen elektrischen Maschinen der Fall ist.

Die elektrisch leitfähige Schicht hat bevorzugt einen geringeren spezifischen elektrischen Widerstand als der Außenglimmschutz. Dadurch wird vorteilhaft sichergestellt, dass der Außenglimmschutz elektrisch an das geerdete Blechpaket angeschlossen und somit ebenfalls geerdet ist.

Es ist bevorzugt, dass die elektrisch leitfähige Schicht einen Gleitlack und/oder ein Band aufweist, wobei das Band Teflon, Polyethylen, Polyethylenderivate, Polyoxymethylen und/oder Polyoxymethylenderivate aufweist. Der Gleitlack kann dabei auf die Oberfläche des Blechpakets und/oder auf die radial außenseitige Oberfläche des Außenglimmschutzes aufgebracht sein, beispielsweise durch ein Sprühen. Durch das Vorsehen des Gleitlacks und/oder des Bandes kann der elektrische Leiter zusammen mit der Hauptisolation und dem Außenglimmschutz besonders einfach entfernt werden.

Der Gleitlack weist bevorzugt Polyvinylacetat, Epoxidharz, Novolak, Teflon und/oder Novolak-Epoxidharz auf. Diese Verbindungen werden vorteilhaft beim Imprägnieren nicht von einem Imprägnierharz angegriffen und gehen keine chemische Reaktion mit dem Imprägnierharz ein. Dadurch kann der elektrische Leiter zusammen mit der Hauptisolation, dem Außenglimmschutz und dem Imprägnierharz besonders einfach entfernt werden. Der Gleitlack ist bevorzugt temperaturbeständig bis 130°C. Dadurch wird der Gleitlack beim Imprägnieren vorteilhaft nicht angegriffen. Es ist bevorzugt, dass der Gleitlack Graphit aufweist. Durch das Graphit ist der Gleitlack elektrisch leitfähig und hat gleichzeitig eine geringe Haftung mit dem Außenglimmschutz und/oder mit dem Blechpaket.

Es ist bevorzugt, dass das Band eine Silikon aufweisende Beschichtung aufweist. Dadurch kann die Haftung des Bandes mit dem Außenglimmschutz und/oder dem Blechpaket vorteilhaft verringert werden. Das Band weist bevorzugt ein Gewebe, insbesondere ein Gewebe mit flachen Garnen, und/oder eine Folie auf. Die flachen Garne bewirken eine gute Kontaktierung des Gewebes mit dem Blechpaket, wodurch ein Eindringen des Imprägnierharzes zwischen das Gewebe und dem Blechpaket vorteilhaft verringert wird. Es ist bevorzugt, dass das Gewebe imprägnierbar ist und/oder die Folie perforiert und/oder derart auf den Außenglimmschutz gewickelt ist, dass zwischen zwei benachbarten Windungen ein Spalt vorgesehen ist. Durch das Vorsehen der Perforierung und/oder des Spalts kann ebenso wie bei dem Gewebe das Imprägnierharz von radial außen in den Außenglimmschutz und in die Hauptisolierung eindringen. Das Band weist bevorzugt zwei Lagen der Folie auf, wobei die Folie derart perforiert ist, dass die zwei Lagen versetzt zueinander perforiert sind. Durch das Vorsehen von zwei Lagen kann der elektrische Leiter zusammen mit der Hauptisolation und dem Außenglimmschutz besonders einfach entfernt werden. Zudem ist ein Rückfluss von dem Imprägnierharz aus der Hauptisolation in den Raum zwischen der Folie und dem Blechpaket vorteilhaft erschwert, wodurch ein Verkleben der Folie mit dem Blechpaket weniger wahrscheinlich wird.

Es ist bevorzugt, dass das Band Rußpartikel, Graphitpartikel, Carbonfasern und/oder elektrisch halbleitende Partikel, insbesondere SiC-Partikel, Metalloxid-Partikel und/oder mit Metalloxiden beschichtete Glimmerpartikel und/oder Aluminiumoxid-Partikel, aufweist. Mit diesen Partikeln kann die elektrische Leitfähigkeit des Bandes besonders einfach hergestellt werden. Dabei ist bevorzugt, dass die Partikel in dem Band perkolierend vorliegend, was bedeutet, dass sie ein durchgehendes Netzwerk von der einen flächigen Seite des Bandes zu der anderen flächigen Seite des Bandes bilden.

Das Blechpaket weist Lamellen auf, die unterschiedlich weit in die Nuten hineinragen, wobei lediglich ein Teil der Lamellen mit dem Band in Kontakt steht, wobei der Teil gebildet ist von weit in die Nuten hineinragenden Lamellen. Somit ist zwischen dem anderen Teil der Lamellen und dem Band ein Hohlraum angeordnet, in dem das Imprägnierharz sich beim Imprägnieren verteilen kann. Von dem Hohlraum kann dann das Imprägnierharz in den Außenglimmschutz und in die Hauptisolation eindringen. Es ist bevorzugt, dass die Abmessungen des elektrischen Leiters, der Hauptisolation, des Außenglimmschutzes und der Nuten derart gewählt sind, dass das Band an das Blechpaket gedrückt ist. Dadurch kann beim Imprägnieren kein Tränkharz zwischen den weit hineinragenden Lamellen und dem Band eindringen, wodurch ein Verkleben zwischen den weit hineinragenden Lamellen und dem Band verhindert wird und die elektrisch leitfähige Verbindung von dem Band und dem Blechpaket auch beim Imprägnieren aufrecht erhalten bleibt.

Es ist bevorzugt, dass die Hauptisolation und der Außenglimmschutz von einem Imprägnierharz imprägniert sind und das Imprägnierharz ausgehärtet ist, wobei kein Imprägnierharz sich befindet an Stellen, an denen die elektrisch leitfähige Schicht den Außenglimmschutz mit dem Blechpaket elektrisch leitfähig verbindet.

Bei dem erfindungsgemäßen Verfahren zum Auseinanderbauen der elektrischen Maschine werden der elektrische Leiter, die Hauptisolation und der Außenglimmschutz aus den Nuten entfernt, wobei beim Entfernen ein Trennen von dem Außenglimmschutz und der elektrisch leitfähigen Schicht und/oder ein Trennen von der elektrisch leitfähigen Schicht und dem Blechpaket erfolgt.

Das erfindungsgemäße Verfahren zum Herstellen der elektrischen Maschine weist die Schritte auf: Einbringen eines elektrischen Leiters, einer den Leiter umhüllenden Hauptisolation und einem die Hauptisolation umhüllenden Außenglimmschutz in Nuten eines Blechpaket der elektrischen Maschine, wobei radial außerhalb des Außenglimmschutzes eine elektrisch leitfähige Schicht vorgesehen ist, die eingerichtet ist den Außenglimmschutz mit dem Blechpaket elektrisch leitfähig zu verbinden; Imprägnieren der Hauptisolation und des Außenglimmschutzes mit einem Imprägnierharz; Aushärten des Imprägnierharzes. Dabei kann die elektrisch leitfähige Schicht auf das Blechpaket aufgebracht werden, bevor der Leiter zusammen mit der Hauptisolation und dem Außenglimmschutz in die Nut eingebracht wird. Alternativ kann die elektrisch leitfähige Schicht radial außen auf den Außenglimmschutz aufgebracht werden, bevor der Leiter zusammen mit der Hauptisolation und dem Außenglimmschutz in die Nut eingebracht wird.

Im Folgenden werden bevorzugte Ausführungsformen der erfindungsgemäßen elektrischen Maschine anhand der beigefügten schematischen Zeichnungen erläutert. Es zeigen:
- Figuren 1 bis 6: verschiedene erfindungsgemäße elektrische Maschinen und
- Figuren 7 bis 9: verschiedene Wicklungen einer Folie.

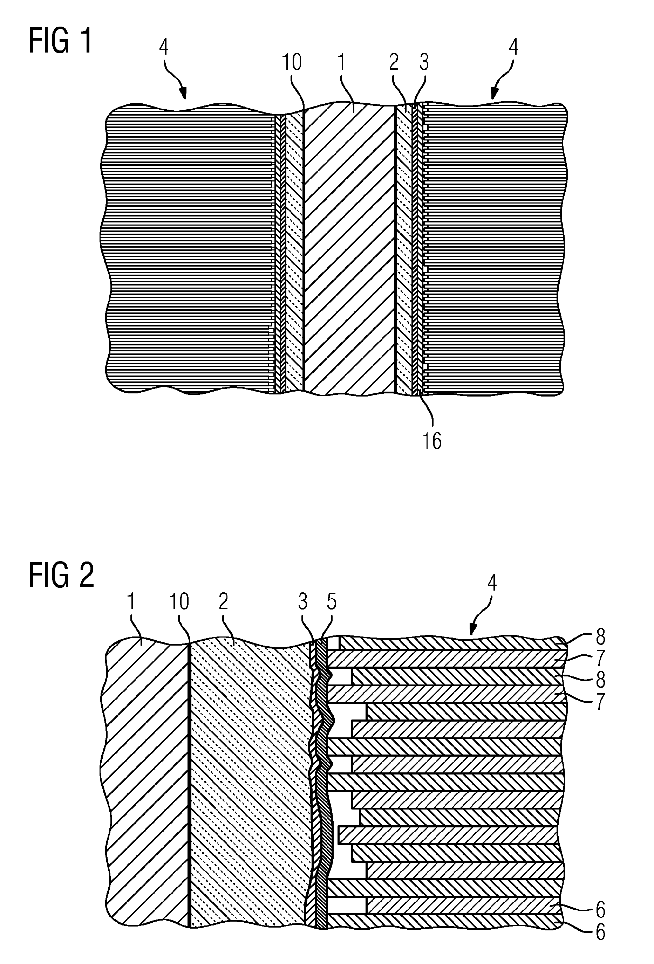

Wie es aus Figuren 1 bis 6 ersichtlich ist, weist eine elektrische Maschine einen elektrischen Leiter 1, eine den Leiter 1 umhüllende Hauptisolation 2, einen auf die Hauptisolation 2 aufgebrachten und diesen umhüllenden Außenglimmschutz 3 und ein Blechpaket 4 auf, in das Nuten eingebracht sind. Der elektrische Leiter 1 mit der Hauptisolation 2 und dem Außenglimmschutz 3 ist in die Nuten des Blechpakets 4 eingebracht. Der Außenglimmschutz 3 ist schwach elektrisch leitfähig und geerdet und somit eingerichtet Teilentladungen zwischen der Hauptisolation 2 und dem Blechpaket 4 zu vermeiden. Zwischen dem elektrischen Leiter 1 und der Hauptisolation 2 kann eine elektrisch schwach leitfähige Innenpotentialsteuerung 10 vorgesehen sein, um Teilentladungen zwischen dem elektrischen Leiter 1 und der Hauptisolation 2 zu vermeiden. Das Blechpaket weist Lamellen 6 auf, die unterschiedlich weit in die Nuten hineinragen. Die Lamellen 6 werden unterschieden in exponierte Lamellen 7, die weit in die Nuten hineinragen, und zurückgesetzte Kamelle 8, die weniger weit als die exponierten Lamellen 6 in die Nuten hineinragen.

Die elektrischen Maschinen gemäß Figuren 1 bis 4 und 5 weisen eine elektrisch leitfähige Schicht 16 auf, die radial außerhalb des Außenglimmschutzes 3 angeordnet ist und eingerichtet ist den Außenglimmschutz 3 mit dem Blechpaket 4 elektrisch leitfähig zu verbinden. Die elektrisch leitfähige Schicht 16 hat einen geringeren spezifischen elektrischen Widerstand als der Außenglimmschutz 3. Die Haftungen von Hauptisolation 2, Außenglimmschutz 3, elektrisch leitfähiger Schicht 16 und Blechpaket 4 sind derart aufeinander abgestimmt, dass an einer Oberfläche der elektrisch leitfähigen Schicht 16 die geringste Haftung vorliegt. Dadurch wird erreicht, dass bei einem Entfernen des elektrischen Leiters 1 mit der Hauptisolation 2 und dem Außenglimmschutz 3 eine Trennung zwischen der elektrisch leitfähigen Schicht 16 und dem Außenglimmschutz 3 und/oder zwischen der elektrisch leitfähigen Schicht 16 und dem Blechpaket 4 erfolgt.

Beispielsweise kann die elektrisch leitfähige Schicht 16 einen Gleitlack aufweisen. Der Gleitlack 16 kann an der Oberfläche des Blechpakets 4 und/oder an der Oberfläche des Außenglimmschutzes 3 angeordnet sein. Der Gleitlack weist Polyvinylacetat, Epoxidharz, Novolak, Teflon und/oder Novolak-Epoxidharz auf. Weiterhin weist der Gleitlack Graphit auf. Es ist denkbar, dass der Gleitlack auch auf die Oberfläche des elektrischen Leiters 1 aufgebracht ist.

Die elektrisch leitfähigen Schichten 16 der elektrischen Maschinen gemäß Figuren 2 bis 4 weisen ein elektrisch leitfähiges Band 5 auf, wobei das Band 5 Teflon, Polyethylen, Polyethylenderivate, Polyoxymethylen und/oder Polyoxymethylenderivate aufweist. Das Band 5 weist für seine elektrische Leitfähigkeit Rußpartikel, Graphitpartikel, Carbonfasern und/oder elektrisch halbleitende Partikel, insbesondere SiC-Partikel, Metalloxid-Partikel und/oder mit Metalloxiden beschichtete Glimmerpartikel und/oder Aluminiumoxid-Partikel, auf. Das Band 5 kann eine Silikon aufweisende und elektrisch leitfähige Beschichtung aufweisen. Die Beschichtung weist für ihre elektrische Leitfähigkeit Rußpartikel, Graphitpartikel, Carbonfasern und/oder elektrisch halbleitende Partikel, insbesondere SiC-Partikel, Metalloxid-Partikel und/oder mit Metalloxiden beschichtete Glimmerpartikel und/oder Aluminiumoxid-Partikel, auf. Wie es aus Figur 2 ersichtlich ist, können sich die Hauptisolation 2, der Außenglimmschutz 3 und, in dem Fall, dass das Band 5 vorgesehen ist, das Band 5 im Bereich der zurückgesetzten Lamellen 8 relaxieren.

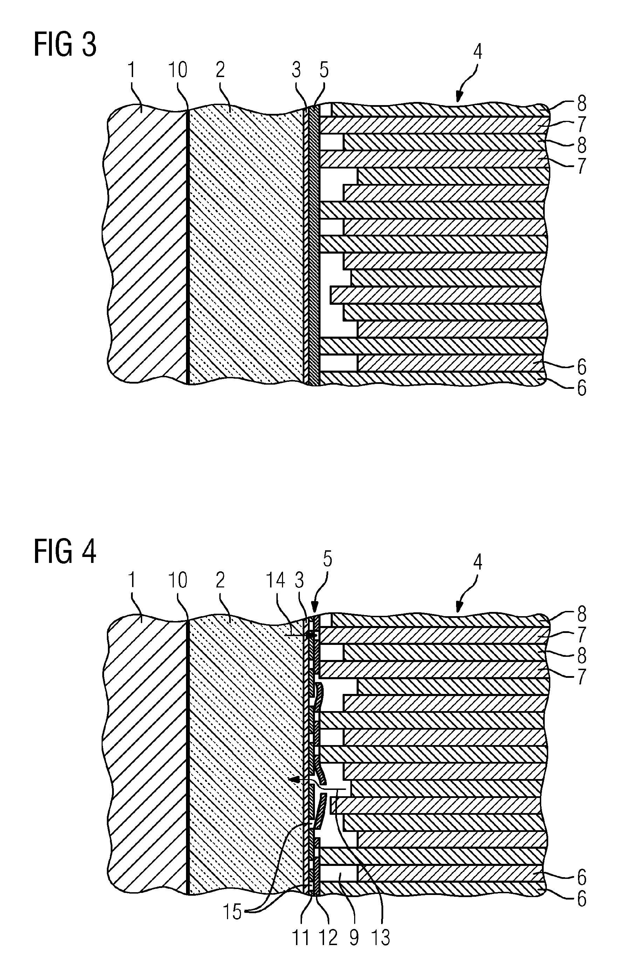

Wie es aus Figuren 2 bis 4 ersichtlich ist, steht lediglich ein Teil der Lamellen 6 mit dem Band 5 in Kontakt, wobei der Teil gebildet ist von weit in die Nuten hineinragenden Lamellen 6, nämlich von den exponierten Lamellen 7. In die Hohlräume zwischen den zurückgesetzten Lamellen 8 und dem Band 5 kann beim Herstellen der elektrischen Maschine das Imprägnierharz 9 eindringen und von dort in den Außenglimmschutz 3 und in die Hauptisolation 2 eindringen. Dies ist in Figur 4 durch den Pfad 13 dargestellt. Die Abmessungen des elektrischen Leiters 1, der Hauptisolation 2, des Außenglimmschutzes 3 und der Nuten sind derart gewählt, dass das Band 5 an das Blechpaket 4 gedrückt ist. Dadurch kann beim Herstellen der elektrischen Maschine das Imprägnierharz 9 nicht an Kontaktstellen des Bands 5 mit dem Blechpaket gelangen. Dies ist in Figur 4 durch den Pfad 14 dargestellt. Das in den Hohlräumen zwischen dem Blechpaket 4 und dem Band 5 eingedrungene Imprägnierharz 9 stört beim Entfernen des elektrischen Leiters 1 zusammen mit der Hauptisolation 2 und dem Außenglimmschutz 3 nicht, weil die exponierten Lamellen 7 frei von Imprägnierharz sind und somit eine geschwächte oder fehlende mechanische Verbindung zwischen dem Band 5 und dem Blechpaket 4 sichergestellt ist.

Das Band 5 der elektrischen Maschine gemäß Figur 3 weist ein Gewebe auf, wobei das Gewebe Teflon, Polyethylen, Polyethylenderivate, Polyoxymethylen und/oder Polyoxymethylenderivate aufweist. Das Gewebe ist derart gestaltet, dass es von einem Imprägnierharz 9 imprägnierbar ist. Das Gewebe kann weiterhin flache Garne aufweisen.

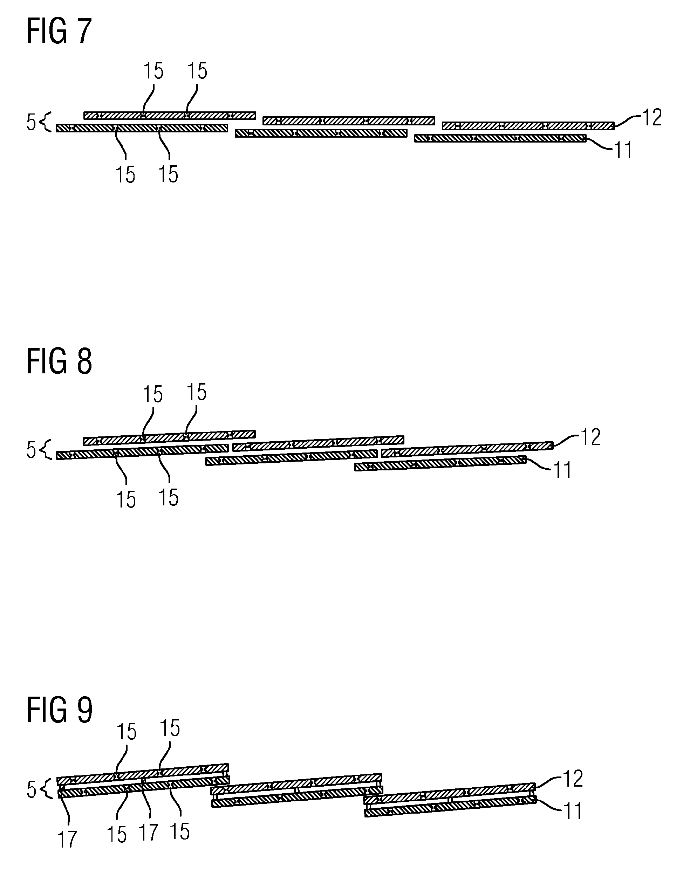

Das Band 5 der elektrischen Maschine gemäß Figur 4 weist eine Folie auf, wobei die Folie Teflon, Polyethylen, Polyethylenderivate, Polyoxymethylen und/oder Polyoxymethylenderivate aufweist. Damit ein Imprägnieren mit dem Imprägnierharz 9 erfolgen kann, ist die Folie mit Perforationslöchern 15 perforiert und/oder derart auf den Außenglimmschutz 3 gewickelt, dass zwischen zwei benachbarten Windungen ein Spalt vorgesehen ist. Einige derartig Beispielse sind in Figuren 7 bis 9 dargestellt, wobei das Band auch punktgeklebte Folien gemäß Figur 9 aufweisen kann. Die elektrische Maschine gemäß Figur 4 weist eine Innenlage 11 und eine Außenlage 12 der Folie auf, wobei die Folie derart perforiert ist, dass die Perforationslöcher 15 der zwei Lagen 11, 12 versetzt zueinander angeordnet sind.

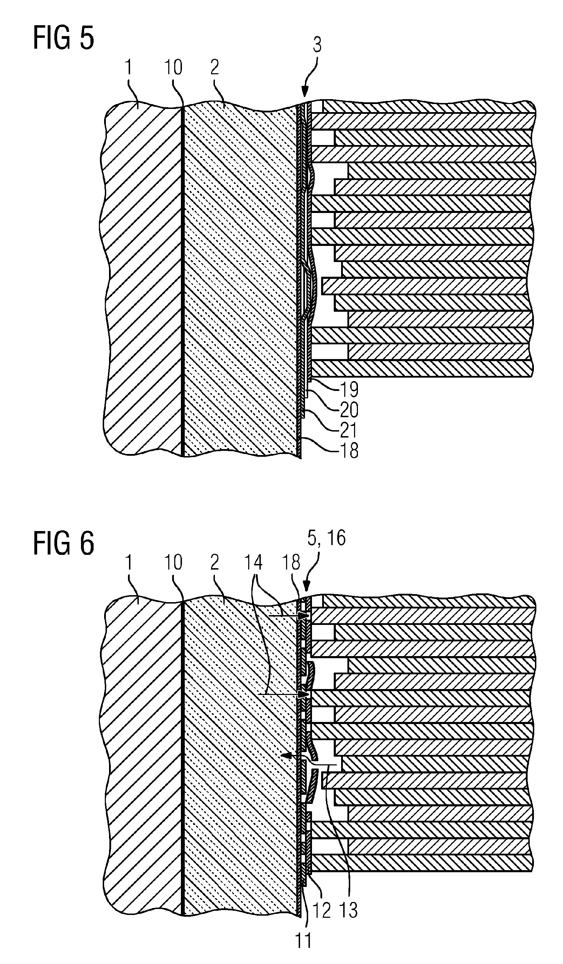

Der Außenglimmschutz 3 der elektrischen Maschine gemäß Figur 5 weist eine unmittelbar auf die Hauptisolation 2 aufgebrachte Außenglimmschutzinnenlage 18, eine radial außerhalb der Außenglimmschutzinnenlage 18 angeordnete Außenglimmschutzaußenlage 19 und ein zwischen der Außenglimmschutzinnenlage 18 und der Außenglimmschutzaußenlage 19 angeordnetes Glimmerband 20 auf. Die Außenglimmschutzinnenlage 18 und die Außenglimmschutzaußenlage 19 sind schwach elektrisch leitfähig. Das Glimmerband 20 weist Glimmer auf, ist elektrisch isolierend und bewirkt eine mechanische Entkopplung der Außenglimmschutzinnenlage 18 und der Außenglimmschutzaußenlage 19. Um die Außenglimmschutzinnenlage 18 und die Außenglimmschutzaußenlage 19 elektrisch zu verbinden, ist ein elektrisch leitfähiges Kontaktband 21 vorgesehen, welches abwechselnd radial innen und radial außen des Glimmerbandes 20 angeordnet ist. Beim Entfernen des elektrischen Leiters 1 mit der Hauptisolation 2 und dem Außenglimmschutz 3 wird eine Trennung im Bereich des Glimmerbandes 20 erfolgen, wodurch ein Teil des Außenglimmschutzes 3 an dem Blechpaket 4 kleben bleibt. Um dies zu verhindern, kann die elektrisch leitfähige Schicht 16 zwischen dem Außenglimmschutz 3 und dem Blechpaket 4 vorgesehen sein. In dem Fall, dass die elektrische leitfähige Schicht 16 vorgesehen ist, braucht das Glimmerband 20, das Kontaktband 21 und die Außenglimmschutzaußenlage 19 nicht vorgesehen werden, wodurch die elektrische Maschinen einen einfachen Aufbau hat. Figur 6 zeigt eine solche elektrische Maschine, bei der der Außenglimmschutz 3 lediglich die Außenglimmschutzinnenlage 18 aufweist. Die elektrisch leitfähige Schicht 16 ist hier gebildet von der Folie, wobei zwei Lagen 11, 12 der Folie vorgesehen sind.

Beispielsweise weist das Imprägnierharz ein Epoxidharz auf. Das Epoxidharz weist beispielsweise Bisphenol-A-diglycidylether, Bisphenol-F-diglycidylether, Phenolnovolake, aliphatische Epoxide und/oder zykloaliphatische Epoxide auf. Weiterhin ist bevorzugt, dass das Epoxidharz ein zyklisches Carbonsäureanhydrid aufweist, insbesondere Maleinsäureanhydrid, Phthalsäureanhydrid, Methylhexahydrophthalsäureanhydrid und/oder Hexahydrophthalsäureanhydrid.

Beispielsweise weisen die Hauptisolation 2 und/oder der Außenglimmschutzschutz 3 Glimmer auf, insbesondere in der Form eines Glimmerpapiers. Für die elektrische Leitfähigkeit des Außenglimmschutzes 3 kann der Glimmer mit Metalloxiden beschichtet sein, insbesondere mit halbleitenden Metalloxiden.

Bei einem beispielhaften Verfahren zum Auseinanderbauen der elektrischen Maschine werden der elektrische Leiter 1, die Hauptisolation 2 und der Außenglimmschutz 3 aus den Nuten entfernt werden, wobei beim Entfernen ein Trennen von dem Außenglimmschutz 3 und der elektrisch leitfähigen Schicht 16 und/oder ein Trennen von der elektrisch leitfähigen Schicht 16 und dem Blechpaket 4 erfolgt.

Beispielhaft ist ein Verfahren zum Herstellen der elektrischen Maschine wie folgt durchzuführen: Einbringen eines elektrischen Leiters 1, einer den Leiter 1 umhüllenden Hauptisolation 2 und einem die Hauptisolation 2 umhüllenden Außenglimmschutz 3 in Nuten eines Blechpaket 4 der elektrischen Maschine, wobei radial außerhalb des Außenglimmschutzes 3 eine elektrisch leitfähige Schicht 16 vorgesehen ist, die eingerichtet ist den Außenglimmschutz 3 mit dem Blechpaket 4 elektrisch leitfähig zu verbinden; Imprägnieren der Hauptisolation 2 und des Außenglimmschutzes 3 mit einem Imprägnierharz; Aushärten des Imprägnierharzes.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
mit einem elektrischen Leiter (1), einer den Leiter (1) umhüllenden Hauptisolation (2), einem die Hauptisolation (2) umhüllenden Außenglimmschutz (3), einem Blechpaket (4) mit Nuten, in die der Leiter (1) eingebracht ist, und einer elektrisch leitfähigen Schicht (16), die radial außerhalb des Außenglimmschutzes (3) angeordnet ist und eingerichtet ist den Außenglimmschutz (3) mit dem Blechpaket (4) elektrisch leitfähig zu verbinden,
wobei die Haftungen von Hauptisolation (2), Außenglimmschutz (3), elektrisch leitfähiger Schicht (16) und Blechpaket (4) derart aufeinander abgestimmt sind, dass an einer Oberfläche der elektrisch leitfähigen Schicht (16) die geringste Haftung vorliegt.

2. Elektrische Maschine gemäß Anspruch 1,
wobei die elektrisch leitfähige Schicht (16) einen geringeren spezifischen elektrischen Widerstand als der Außenglimmschutz (3) hat.

3. Elektrische Maschine gemäß Anspruch 1 oder 2,
wobei die elektrisch leitfähige Schicht (16) einen Gleitlack und/oder ein Band (5) aufweist, wobei das Band (5) Teflon, Polyethylen, Polyethylenderivate, Polyoxymethylen und/oder Polyoxymethylenderivate aufweist.

4. Elektrische Maschine gemäß Anspruch 3,
wobei der Gleitlack Polyvinylacetat, Epoxidharz, Novolak, Teflon und/oder Novolak-Epoxidharz aufweist.

5. Elektrische Maschine gemäß Anspruch 3 oder 4,
wobei der Gleitlack Graphit aufweist.

6. Elektrische Maschine gemäß einem der Ansprüche 3 bis 5, wobei das Band eine Silikon aufweisende Beschichtung aufweist.

7. Elektrische Maschine gemäß einem der Ansprüche 3 bis 6, wobei das Band (5) ein Gewebe, insbesondere ein Gewebe mit flachen Garnen, und/oder mindestens eine Folie aufweist.

8. Elektrische Maschine gemäß Anspruch 7,
wobei das Gewebe imprägnierbar ist die Folie perforiert und/oder derart auf den Außenglimmschutz (3) gewickelt ist, dass zwischen zwei benachbarten Windungen ein Spalt vorgesehen ist.

9. Elektrische Maschine gemäß Anspruch 7 oder 8,
wobei das Band (5) zwei Lagen (11, 12) der Folie aufweist, wobei die Folie derart perforiert ist, dass die zwei Lagen (11, 12) versetzt zueinander perforiert sind.

10. Elektrische Maschine gemäß einem der Ansprüche 3 bis 9, wobei das Band (5) Rußpartikel, Graphitpartikel, Carbonfasern und/oder elektrisch halbleitende Partikel, insbesondere SiC-Partikel, Metalloxid-Partikel und/oder mit Metalloxiden beschichtete Glimmerpartikel und/oder Aluminiumoxid-Partikel, aufweist.

11. Elektrische Maschine gemäß einem der Ansprüche 3 bis 10, wobei das Blechpaket Lamellen (6) aufweist, die unterschiedlich weit in die Nuten hineinragen, wobei lediglich ein Teil der Lamellen (6) mit dem Band (5) in Kontakt steht, wobei der Teil gebildet ist von weit in die Nuten hineinragenden Lamellen (6).

12. Elektrische Maschine gemäß Anspruch 11,
wobei die Abmessungen des elektrischen Leiters (1), der Hauptisolation (2), des Außenglimmschutzes (3) und der Nuten derart gewählt sind, dass das Band (5) an das Blechpaket (4) gedrückt ist.

13. Elektrische Maschine gemäß einem der Ansprüche 1 bis 12, wobei die Hauptisolation (2) und der Außenglimmschutz (3) von einem Imprägnierharz imprägniert sind und das Imprägnierharz ausgehärtet ist, wobei kein Imprägnierharz sich befindet an Stellen, an denen die elektrisch leitfähige Schicht (16) den Außenglimmschutz (3) mit dem Blechpaket (4) elektrisch leitfähig verbindet.

14. Verfahren zum Auseinanderbauen einer elektrischen Maschine gemäß einem der Ansprüche 1 bis 12,
bei dem der elektrische Leiter (1), die Hauptisolation (2) und der Außenglimmschutz (3) aus den Nuten entfernt werden, wobei beim Entfernen ein Trennen von dem Außenglimmschutz (3) und der elektrisch leitfähigen Schicht (16) und/oder ein Trennen von der elektrisch leitfähigen Schicht (16) und dem Blechpaket (4) erfolgt.

15. Verfahren zum Herstellen einer elektrischen Maschine gemäß einem der Ansprüche 1 bis 12,
mit den Schritten
- Einbringen eines elektrischen Leiters (1), einer den Leiter (1) umhüllenden Hauptisolation (2) und einem die Hauptisolation (2) umhüllenden Außenglimmschutz (3) in Nuten eines Blechpaket (4) der elektrischen Maschine, wobei radial außerhalb des Außenglimmschutzes (3) eine elektrisch leitfähige Schicht (16) vorgesehen ist, die eingerichtet ist den Außenglimmschutz (3) mit dem Blechpaket (4) elektrisch leitfähig zu verbinden;
- Imprägnieren der Hauptisolation (2) und des Außenglimmschutzes (3) mit einem Imprägnierharz;
- Aushärten des Imprägnierharzes.
